# EUROPEAN PATENT SPECIFICATION

(11) **EP 3 832 510 B1**
(45) Date of publication and mention of the grant of the patent: **26.04.2023**
(21) Application number: 19383082.5
(22) Date of filing: 05.12.2019
(51) Int. Cl.: G06F 21/62, H04L 9/32, G06F 21/64, H04L 9/40, H04L 9/00, G06F 21/60

(54) **METHOD, SYSTEM AND COMPUTER PROGRAMS FOR NOT REPUDIABLE TRANSPARENT ORDERING, REPLICATION AND LOGGING OF OPERATIONS INVOLVING PERSONAL DATA**
VERFAHREN, SYSTEM UND COMPUTERPROGRAMME FÜR NICHT LEUGBARE TRANSPARENTE GLIEDERUNG, REPLIKATION UND PROTOKOLLIERUNG VON OPERATIONEN, DIE PERSÖNLICHE DATEN UMFASSEN
PROCÉDÉ, SYSTÈME ET PROGRAMMES INFORMATIQUES POUR LA COMMANDE, LA REPRODUCTION ET L'ENREGISTREMENT TRANSPARENTS ET NON RÉPUDIABLES DES OPÉRATIONS IMPLIQUANT DES DONNÉES PERSONNELLES

(43) Date of publication of application: 09.06.2021
(73) Proprietor: Telefonica Digital España, S.L.U., 28013 Madrid (ES)
(72) Inventor: BREZO FERNÁNDEZ, Félix, 28013 Madrid (ES); RUBIO VIÑUELA, Yaiza, 28013 Madrid (ES)
(74) Representative: Carlos Hernando, Borja

(56) References cited:
- US-A1- 2019 182 047

## Description

### Technical Field

The present invention is directed, in general, to Blockchain technology. In particular, the invention relates to a method, system and computer programs for not repudiable transparent ordering, replication and logging of operations involving personal data.

### Background of the Invention

The definition of the protocol that Bitcoin brought with it in 2008 [1] was the beginning of a multitude of applications and use cases that are based on the technology that makes it possible: the blockchain. Since the first definitions of the Bitcoin protocol, the concept has evolved far beyond creating the peer-to-peer electronic payment system described in the original paper by proposing a distributed public ledger that keeps track of all the operations in the network so that they remain both immutable and verifiable. The blocks mined approximately every 10 minutes have led to projects such as the Lightning Network [2] that allow the realization of practically instantaneous payments based on a separate Bitcoin network.

But the changes have gone far beyond this use. In Namecoin [3], the blockchain is used to permanently register domain registration information; in Ethereum [4], the paradigm is expanded by introducing the concept of smart contracts, which are programmed in a specific programming language such as Solidity with which users can interact and operate autonomously; while in Monero [5] the operations registered in the public blockchain do not expose either the transferred balance or the origin or recipient of a transaction as happens in Bitcoin.

Each with its nuances, the number of protocols and implementations of technologies that inherit this philosophy is counted by hundreds [6]. However, all of them share a common concept: the use of a distributed, immutable and persistent accounting record. It is said to be immutable because the operations are grouped into blocks that are cryptographically chained to the previous one, so that just modifying a bit in a previous block will result in a completely different chain besides being invalid. It is also said to be persistent because a copy of the operations anchored in the chain is stored in each participating node, making it potentially impossible to censor the entire registry without seriously affecting other services that operate in the network.

The solutions proposed in Bitcoin in search of decentralization assume that the participants are in a hostile environment. Therefore, the definition of consensus protocols that reduce the possibility of having their operations censored has focused the debate over these years. Still, users can find a service to be used to store data linked to monetary transactions on the one hand, and more complex data structures on the other even when they do not trust their peers.

The replication of information in conventional blockchains democratizes the access to notarization systems by offering guarantees of the immutability and persistence of anchored data. Its distributed storage and the guarantee of immutability facilitated from the block chaining is a strong point that allows a third party to use it to prove the existence of a certain information in a specific moment of time when it is anchored in a transaction that is registered in the chain in a verifiable way.

These characteristics mean that the technology can be used in cases of use that require this guarantee of immutability and persistence, but they have to take into account that the information generated in this way cannot be eliminated or erased from them since all of it, as a whole, may be necessary for the maintenance of a coherent blockchain from its inception.

Furthermore, the complexities are significant when it comes to guaranteeing the right to forget the anchored data, bearing in mind that the information is copied and maintained by the different nodes of the network. For example, the General Data Protection Regulation [7] (hereinafter, GDPR) sets out the inexcusable obligations of those responsible for processing personal data when it comes to guarding this information. Precisely this respect for the law, which makes that not all solutions based on technology are implementable in the business environment since they cannot guarantee that the anchored information linked to an identifiable user is erasable when the exact information is needed to correctly work out the current state of the blockchain.

Indeed, there already exists a method for managing personal information which respects the privacy by design philosophy as well as current data protection regulations [8]. However, this system is not focused on non-repudiation. Those actors in charge of administering or simply writing in the permissioned/permissive blockchain could still moor additional operations or personal data which could be disclosed to the ones involved at will.

The main scenario is one in which an organization wants to proof a stakeholder that an event has taken place. This information could be hashed and emitted in transparent blockchain's such as Bitcoin or Ethereum. However, it cannot be emitted from addresses that belong to a user since the mere existence of that address or contract linkable to a him entails the operation with personal data which could be used to identify him based on habits, routines or other information.

To achieve this goal, the organization in charge of anchoring the data in the blockchain could emit a digitally signed transaction (proving its integrity and origin) which would also include the cryptographic proof of the event to seal. As a first transparency exercise, this actor could hand the data that leads to that proof.

However, this approach is not enough taking into account that this same administrator could have also individually anchored other linked to a user which is not revealed to the involved profile. At this point, the commitment to known actions could be confirmed by the user, but the organizer could still anchor extra data which was not revealed to the user when it was created leading to possible disputes.

Thus, it is important to define a system that guarantees that the operations involving personal data which are moored in a blockchain are also chained to the previous operation of a user. By doing so, the user whose data is used can guarantee that, even when the one guarding the blockchain is a third actor with chances for shipping any kind of new transactions, he has a verifiable commitment with the information provided by the actor with write permissions to the system.

At the same time, current blockchain proposals have a limit in terms of operations-performed per-second. If the operations involving personal data need to scale, more complex hashing solutions than the ones provided in [8] need to be proposed to address this problems, a feature which is also detailed in the lines which follow.

Patent application US2019182047 discloses a method for securely sharing validation information of one or more data files stored on different cloud servers using distributed ledger technology. The method includes requesting access to the data files and calculating a hash thereof. A structured Merkle tree is constructed using the hash and additional hashes of other data files for which a user has not granted access, but has used to construct a corresponding Merkle tree for which the user has committed a root value to a main blockchain. It is checked whether the root value of the Merkle tree is the same as the one the user has committed, and whether the hash of the data files is stored in a block of a satellite blockchain linked to the main blockchain and operated by a subset of nodes of the main blockchain that trust one another.

### Description of the Invention

To that end the present invention proposes, according to one aspect, a method for not repudiable transparent ordering, replication and logging of operations involving personal data. The method comprises performing, by a user via a computing device, e.g. a mobile phone, an operation using a data controller computing node, said data controller computing node having writing authorization on a first blockchain, the first blockchain being a permissive blockchain; storing, by the data controller computing node, personal information of the user in a storage system separate from the first blockchain; and anchoring, by the data controller computing node, a cryptographic proof of said operation in said first blockchain using a hashing algorithm that
chains the operation to a previous operation performed by said user, the cryptographic proof being anchored together with a cryptographic string of a certain length.

The first blockchain is permissive but it is also public in terms of readability. That is to say, only the organization can write, but anyone can read the information (which is never personal information). This implies de facto that the organization has a commitment to the data published although it is the only one who can write. Moreover, being capable of writing anything, the organization could theoretically add malicious operations without the user knowing it. This problem is addressed by chaining user operations to the previous one. Hence, the user would always be able to track down his/her operations.

In an embodiment, the cryptographic string is a random string. Particularly, the random string has a length of 32 hexadecimal characters.

In an embodiment, the personal information of the user is stored in the separate storage system using an operation index mechanism (or txid). The information of the user is particularly stored with a first data field that details the information whose proof has been anchored in the first blockchain and a second data field including the cryptographic proof.

In an embodiment, the hashing algorithm comprises a Merkle Tree. Merkle Trees facilitates escalation, allowing anchoring more personal-data-operations in a single blockchain transaction.

Thus, with the proposed method, the user would be able to: hash the data of an operation under "data"; go to permissive blockchain; find the txid; extract the hash of the operation and compare it with the generated from the known data; and compare the locally calculated hash with the one obtained from the permissive blockchain. If they match, the provided data is said to be timestamped to the block in which the txid is found. Note that this flow refers to operations whose proofs are stored in 1-to-1 basics with regards to the transactions (i. e., one operation is hashed, and each hash is stored in a different transaction). For improved scalability, using Merkle Trees can lead to a 1-to-n proof anchoring system (i. e., generating a Merkle Tree for 100 operations and only storing the root hash in the transaction). This would introduce a bit overhead in the conventional data store but is a valid approach if the bottleneck is the blockchain repository.

In yet another embodiment the method also anchors, by the data controller computing node, a proof of said anchoring of the cryptographic proof in a second blockchain. This second blockchain can be anything, including any kind of third party notarization platform, system. In a particular embodiment the second blockchain is a Bitcoin's blockchain.

According to another aspect present invention also provides a system for not repudiable transparent ordering, replication and logging of operations involving personal data. The proposed system comprises a computing device of a user, a data controller computing node; a first blockchain and a storage system separate from said first blockchain. The data controller computing node has writing authorization on the first blockchain, the latter being a permissive blockchain.

In the proposed system the data controller computing node is configured to receive an operation from the user and to store personal information of the user in said storage system and anchor a cryptographic proof of said received operation in the first blockchain using a hashing algorithm that chains the operation to a previous operation performed by the user, the cryptographic proof being anchored together with a cryptographic string of a certain length.

Hence, present invention provides a platform in which each actor with write permissions will write cryptographic proofs of events linked to a person/user which are individually chained to previous events of that same person/user, keeping any relevant personal information offchain in a separate conventional storage will keeping inchain these cryptographic proofs. By doing so, the company/organization could hand to the user each and every event in which he is involved and even delete his data from corporate systems while the user can still proof to third parties the integrity of all of his transactions.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The blockchain technology offers a series of guarantees with respect to the immutability of the information anchored in it. The rights of the interested parties in terms of their personal data lead to several rules which should be observed by those who manage them. Although these obligations limit the viability of some use cases, the blockchain technology in combination with other cryptographic tools described in this document keeps on facilitating the development of more transparent customer relationship models.

For the reasons stated in this document, any solution that implements the technology must take into account the data protection regulations since its inception phase so as to properly meet the obligations defined in terms of respecting the citizens' rights. Present invention tackles the problem by separating the storage of the cryptographic proofs of existence from the operations involving personal data themselves. Thus, the main improvements of the invention are the following:
- The maintenance of a not repudiable ordered, immutable and consistent record of all the operations and actions that an organization carries out with its users, from business operational logs to other management operations involving personal data, by acquiring and exposing publicly verifiable commitments.
- The establishment of an architecture that allows the interested party to have a verifiable copy of all the operations in which their very own personal data has been involved, with a guarantee of immutability which would still be verifiable by third parties.
- The maintenance of the previous traceability strictly respecting the right to request the deletion of personal data from the company that acquired the commitments, allowing the user to prove their existence with the only presentation of the full registry of the operations involving them.

### Brief Description of the Drawings

The previous and other advantages and features will be more fully understood from the following detailed description of embodiments, with reference to the attached figures, which must be considered in an illustrative and non-limiting manner, in which:
Fig. 1 graphically depicts the course of the proposed method for not repudiable transparent ordering, replication and logging of operations involving personal data.

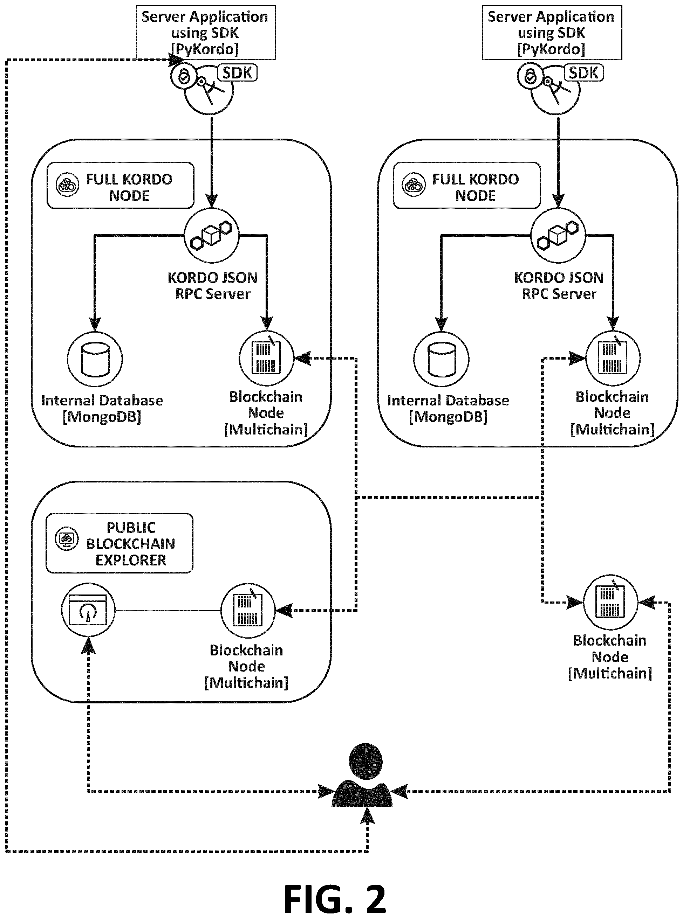

Fig. 2 graphically depicts the interactions between the user and the different types of nodes and the connections between nodes.

### Detailed Description of Preferred Embodiments

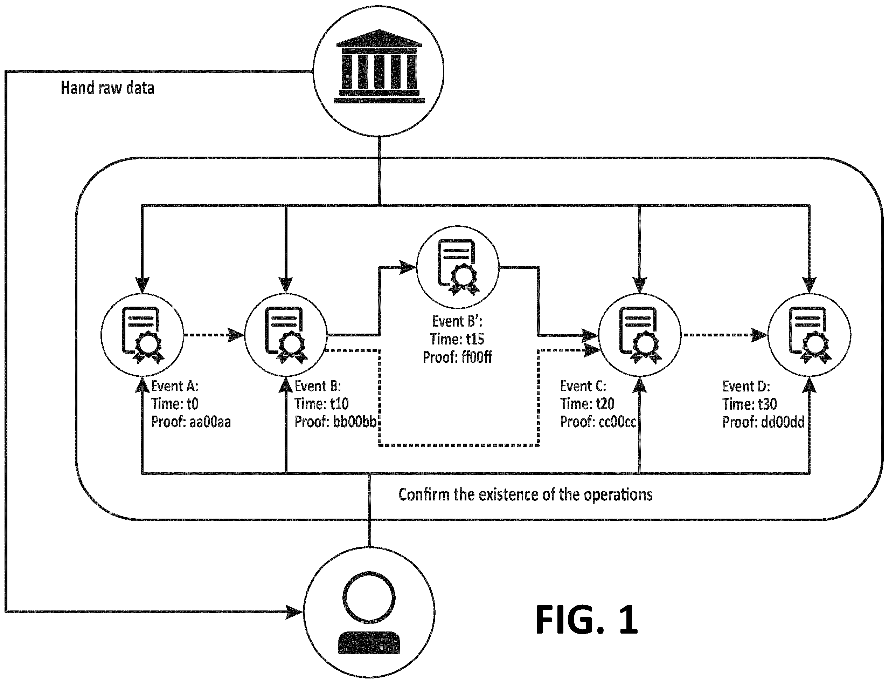

The accounting books provided by the different blockchain technologies offer the possibility of maintaining a network of connected nodes that store a history of immutable, persistent and potentially incensurable records. However, the inclusion of these systems in the business environment entails legislative obligations that need to be addressed, especially when these interactions involve the processing of information covered by current data protection laws. Therefore, present invention benefits from the advantages of having a distributed record in terms of immutability and traceability while maintaining strict compliance with these data protection regulations. To achieve this, see Fig. 1, the personal information together with an identifier representing the previous operation performed by the user is anchored using a cryptographic summary with two objectives: first, not to anchor personal information in an immutable blockchain, and second to provide a proof to the user that the information has not been manipulated and a third party has been able to carry out operations without his or her consent. In addition, the data itself is stored in a conventional database on which it is possible to delete the information when requested.

Present invention proposes a new architecture scheme that, as will be seen in the following sections, includes different elements that will make it possible, on the one hand, to guarantee the existence of certain information using a blockchain and, on the other, to delete the personal data anchored in a conventional repository.

Following, the different processes that make possible the creation of a computing node are detailed. Firstly, some of the technical terminology needed to understand the scope of the invention is described. Secondly, the different elements that make up the system are also detailed. Thirdly, the operation of event sealing is described. Fourthly, the verification process of anchored information is described. Finally, it is described how to handle a request to delete information from the network at a technical level.

### Technical Terminology:

The following concepts refer to technical terminology that will be used throughout the description of present invention.
- Address. The addresses are associated with a pair of cryptographic keys whose public part is created following known procedures to generate a unique identifier. In technologies such as Bitcoin or Litecoin, the different actors can be recipients of different transactions and operate with the received monetary units using the private component of this key pair to sign and carry out exit operations. Although cryptographically robust, the main impact of this model is linked to the importance of the custody of the private keys because in case of loss, destruction or theft of them the legitimate owner will lose total control of the address. This reality represents an important barrier that some services try to avoid by offering key custody systems.
- Wallets. Wallets are understood as pieces of software (or hardware) that implement a management system of different private keys of one or several crypto currencies. Wallets can store the keys in different supports and with different security measures, while they can be connected ("hot wallets") or not to the network ("cold wallets").
- Transaction. Transactional unit in which an actor cryptographically proves his or her willingness to register an operation. These operations may include the transfer of monetary units between two accounts or more complex operations which imply changes of state depending on the chain or which store a piece of data.
- Block. A block is a container unit made up of a set of new transactions to be recorded in the chain. The most relevant characteristic of this structure is that it contains a cryptographic reference of the previous block, which allows them to be successively chained up to the original genesis block. The tiniest modification in any of them will result in a completely different chain.
- Consensus mechanism. In public blockchains, block mining is used to minimize the risk of a transaction not being included in a block by the miner's will. The different existing algorithms implement different procedures such as proof of work to agree which node will be responsible for adding the next block. These processes are defined so that the addition of a new block cannot be known a priori and is distributed homogeneously among the participants. In the case of the proof of work, the participating nodes carry out cryptographic hashing operations on the pending transactions to be added to the chain in search of a hash with specific conditions. The very nature of a hashing operation means that whoever has the computing capacity to carry out these operations will have a greater chance of finding a valid objective hash, but even if you have a majority you cannot be sure who will add the next block but rather the possibilities of doing so. In this way, if the computing capacity of the network is conveniently distributed, the censorship or rejection of a transaction cannot be prolonged indefinitely in time. Some of the best known consensus mechanisms used are the "Proof of Work" or the "Proof of Stake".
- Blockchain. It corresponds to a set of blocks chained together from the original genesis block that gives rise to the chain.
- Public blockchain. This is a blockchain whose information is accessible to anyone and in which anyone can contribute to its maintenance. Examples of public blockchains are Bitcoin, Litecoin or Ethereum.
- Permissive blockchains. This is a blockchain (first blockchain of the claims) in which operations such as access, addition of blocks, transactions creation or other operations are permissioned and controlled by a given actor. This type of technology can be used as shared repositories between different organizations or departments. The supporting technologies can usually be configured to function as chains of public blocks. Hyperledger Fabric [10] or Multichain [11] are implementations of this type of philosophies.
- Anchored data. The concept refers to data inserted in a transaction that is recorded in a blockchain. To prevent system abuse, different block strings set different types of restrictions such as limiting usable space for this purpose. Firstly, the length of the anchored data is arbitrary and depends on the restrictions placed by the protocol in each case. For example, in the case of Bitcoin, the maximum number of bytes that can be anchored is 80 bytes per transaction [12] although in other strings of blocks the size can be configured to much larger spaces [11]. On the other hand, the commissions necessary for a transaction to be added in a block and registered in all the participants of the chain serve as an incentive for the nodes of the network to guard the chain (and the data by extension) achieving the effect of making it costly for a potential attacker to flood the network.
- Hash function. A hash function or summary function is a function that can be used to map data of any length in a delimited size. A good hash function must be deterministic (i.e., that given the same input data always generates the same output), uniform (i.e., that the possible inputs are mapped as homogeneously as possible over the whole range of possible outputs) and non-reversible (i.e., that despite being computable in a simple way, the inverse process of obtaining the input that generates a certain output must be irreversible in a realistic time). In this document SHA-3_512 [13] will be used as hash function.
- Salt. Random bit string used as one of the entries in a hash function. Its mission is to make it difficult to perform brute force attacks by ensuring that the data in each hashed record are different even when the useful part is identical. They are commonly used to store passwords in databases in order to prevent two users using the same password from having the same hashed password value.
- Merkle Tree [14]. This is a cryptographic structure patented in 1979 by Ralph C. Merkle in which each node that is not a leaf is labeled with the cryptographic summary resulting from the concatenation of the lower nodes or child nodes. In this way, knowing the root node, the concrete position occupied by the hash of an object in the tree and the path followed until the root node could be checked if this object was used or not to generate the hash of the root. This method can be used to anchor a single hash, keeping out of the string the necessary tests to corroborate the existence of the object and reducing the volume of data that has to appear in the chain itself.
- Conventional storage system. It corresponds to a conventional storage system in which the information is not chained and which allows the performance of the basic functions of a standard persistent storage system (CRUD, "Create", "Read", "Update" and "Delete").

### System Architecture:

There may be different types of roles within the architecture:
- Full nodes. A full node is composed of three elements: the one that interacts with the blockchain, the conventional CRUD information storage system and the interface responsible for receiving anchoring orders as well as interacting transparently with the blockchain and the conventional storage system.
- Master nodes or administration nodes. They are made up of the same elements as a full node but have the additional responsibility of managing the roles of sending and receiving transactions among other administration tasks. In addition, they are nodes with the capacity to mine, i.e., add new blocks to the chain. This node may authorize the creation of new nodes with permissions to add blocks to the chain to offer improved fault tolerance. Note that these potential nodes with permissions to add blocks will not have incentives at protocol level for the computing and storage capacity given so they will have to be backed by any organization with a legitimate interest in the system.
- Reading nodes. These nodes will have a client that connects to the blockchain with connection permissions but will not have writing permissions. They can be used to provide an API for querying stored information (for example, exposing an interface such as Multichain Explorer [15]) or to allow advanced users to perform manual verifications directly against the chain.

### The blockchain:

As stated before, blockchains can be public or permissive. In present invention a permissive model is used in which the reading of the chain's information is public but in which there are restrictions regarding who can send and receive operations or mine new blocks.

For the establishment of the process of adding new blocks, different solutions such as PoW or PoS can be chosen among others, adjusting the level of mined diversity (understanding "mined diversity" as the number of blocks that a node will have to wait until a new one can be mined again by itself) according to the estimated size of the network. In the nodes of the proposed network, the consensus mechanism to be used is left to the discretion of the administrators of the network.

In this sense, the blockchains based on Multichain facilitate these administration tasks configuring aspects such as the ones that follow: nodes that can be connected, nodes that can send or receive transactions, nodes that can mine new blocks, minimum acceptable diversity criteria, the details of the consensus system, the expected space of time between blocks, the maximum size of the blocks, the maximum size allowed in special storage fields such as OP_RETURN.

For these reasons, in an embodiment, present invention uses a Multichain node. This internal node can be managed by means of a JSON RPC interface, taking advantage of the fact that it is based on and inspired by the management interface of the same type available for Bitcoin.

### The Conventional Storage System:

As stated before, personal information will not be stored in the blockchain. Instead, a storage system deployed in parallel (i.e. separate) to the blockchain will be used. In order to allow greater flexibility as to the nature of the anchored data, a NoSQL database such as MongoDB is preferred.

Particularly, the different operations anchored in the storage system will have a structure that will allow access by transaction index (txid) and will contain an additional data field with the detail of the information whose proof has been anchored in the blockchain and another (proof) with the cryptographic proof itself.

### Node's Control Interface:

In order to control the operations of information anchoring and storage, a JSON RPC interface is provided for its administration and control. The API calls included are defined as follows:
- info. It provides details on the version of the executed node.
- delete_data_from_tx. It is in charge of eliminating the data associated to the transaction in question from the conventional repository. The result will correspond to the number of deleted elements, 1 if it exists.
- get_data_from_tx. It is in charge of recovering the data associated with the transaction in question. The result will correspond to the JSON object associated with that information.
- get_proof_from_tx. It is in charge of retrieving the hash anchored in the transaction in question. The result will correspond to a SHA 3 hash.
- moor_data. It is in charge of anchoring data in the chain of blocks. If the object provided is a dictionary, its keys will be sorted alphabetically. The result will correspond to the transaction in which the hash SHA 3 of the information provided is anchored and the hash anchored:

```
         {
          "txid": "ffffffff..ff",
          "proof": "00112233..ff"
         }
```

- moor list. It is in charge of anchoring a series of objects in the chain of blocks. It requires that the object provided is a list of JSON objects, each of which will be serialized and anchored in a Merkle tree. The result will correspond to the transaction in which the root of the Merkle tree is anchored and the serialized list of tests generated for each object in the list in the same order in which they were delivered.
- use_blockchain. It is in charge of requesting a query task directly against the underlying blockchain. It can be used to launch specific commands such as assigning new permissions or querying transaction information.

When the effects of an action have to be shared with other nodes within the network, the record must be shared with the parties involved so that they can properly interpret its meaning. Some solutions such as Multichain 2.0 [19] implement the communication of private records between two parties by means of in-chain transactions. However, this approach has two effects:
- The storage of the record itself, even if it is encrypted, in one operation of the block chain reproduces it in all the participating nodes forcing them to store encrypted information that they will never use.
- If the encryption of the anchored information were carried out with a single public key, the request for deletion of the data from the system by a single interested party would force them to forget the private key associated with the node and anonymize all the records. However, this could be addressed if the user used independent keys to encrypt each user's information.

Because of this, this proposes the offchain transmission of information using conventional storage systems from which it is possible to remove the information.

### C) The sealing of user events:

As such, the features allow the anchoring of information in the blockchain. However, in order for a user to have guarantees regarding the sealing and chaining of events, it is necessary to establish a data model that guarantees the traceability of the actions attributed to him. The detail of the decisions presented here is alien to the process of anchoring information in a network but involves some of the system design decisions detailed in this section.

To illustrate the operation of the storage system and the procedures for sealing and verification of operations, a model record will be used as follows:

```
  {
   "name": "John",
   "surname": "Doe",
   "operation": {
     "type": "pay",
     "value": 10
  }
  }
```

### User Operations Proofs Chaining:

In conventional blockchains, the tracking of a user's operations is simple since the user keeps their own private key. Using the associated address, a user can easily discover the elements that affect their own address by scanning the blockchain. However, in the blockchain used by present invention the user does not have their own addresses to avoid the risk of indirect identification of the user based on patterns associated with their habits of use for instance. Therefore, transactions are only issued from one account or accounts controlled by the organization.

However, if operations were saved as defined above, a third malicious actor could corrupt the spirit of the system by presenting an incomplete sequence of operations. For example, a user may be informed that operations t1, t2 and t4 are associated with him. He could then verify that they have indeed been stored as presented in the chain but is exposed to the file keeper having other operations (e.g., t3) whose content has not been reported. This scenario opens the door to a selective retrieval of the proofs depending on the convenience of the chain operator, something which is not desired.

In order to protect the user from the unauthorized presentation of operations of which he has no knowledge, the concept of "last chained actions" is introduced. Each operation of a user (with the exception of the very first that will contain an empty string because it cannot be linked to any other) will have a _last_chained_action property that will store the txid of the user's previous operation. In this way, the chaining of each operation with the previous one will guarantee to the user that no third actor has been able to introduce operations without his knowledge since he will be able to check if each new operation carried out about him person is chained with those of which he is already aware.

As a result of this chaining, a new property called _last chained action (note the character _ at the beginning of the property, which denotes its special character containing this reference will be added to the example data model.

```
  {
   "name": "John",
   "surname": "Doe",
   "operation": {
     "type": "pay",
     "concept": "Buy e-book",
     "value": 10.0
  },
   "_last_chained_action": "112233..ff"
  }
```

To provide more flexibility by linking of operations involving several users two different formats for the _last chained action are accepted. On the one hand, the text string that directly represents the identifier of the previous transaction. On the other hand, a dictionary in which the keys refer to the identifiers of each actor involved while the values show their corresponding transactions.

In this way, an example of implementation of a transfer operation of 10 units between the user with the identifier user1 and the user with the identifier user2 could be implemented as follows: "operation":

```
  {
   "operation": {
     "type": "transfer",
     "value": 10.0,
     "from": "user1",
     "to": "user2"
  },
   _last_chained_action" {
    "from": "112233..ff",
    "to": "778899..00"
  }
 }
```

### Anchoring Pseudoanonymized Personal Data:

As mentioned above, the information relating to each operation will not be directly anchored in the chain of blocks. Instead, a hashing algorithm will be applied to the data. Depending on the volume of operations, there are two possibilities: direct anchoring of the cryptographic summary of an operation or anchoring of the cryptographic summary of the Merkle tree in which the information is stored.

### Direct Hashing of the Objects Containing Personal Data:

Although the hashing functions are unidirectional, depending on the data included, there is a risk that the data processor or any person with access to the hash could come across the original record that gave rise to the hash (preimage attacks). For example, in the model proposed as an example, it is assumed that the number of existing names and surnames is large but limited enough so that an unauthorized actor could brute-force it by generating combinations of names, surnames and operations until the data generating the hash is found.

In order to solve this problem, it is necessary to add a cryptographic string (or cryptographic salt) to the record. With this salt, present invention achieves that if two physical persons had generated an identical record because they have the same data they will not generate the same cryptographic summary. In order to satisfy this condition it is necessary that the added string is a known random element which is defined, according to a particular embodiment, as a random string of 32 hexadecimal characters. Starting from these premises, a new _salt attribute will be added to the information stored in the private database:

```
  {
   {"name": "John",
   "surname": "Doe",
   "operation": {
     "type": "pay",
     "value": 10
  },
   "_last chained_action": "112233..ff",
   "_salt": "7a15f5ec6bc44e7ba6c69f792eb31785"
 }
```

Given a record of these characteristics, the storage of this in an "operations" collection of the standard storage will be made as the value of a property named "data", which will be accompanied by a property "txid" that will make reference to the transaction in which the hash of these data is found and a third property named "proof" with the cryptographic proof itself.

In this way, when the node receives a request for information about the information anchored in a specific txid, it will be possible to access the data that give rise to it using this reference. Given the above example, the final object stored in the repository will be as follows:

```
  {
   {"txid": "112233..ff",
   "data": {
    "name": "John",
    "surname": "Doe",
    "operation": {
       "type": "pay",
       "value": 10
    },
    "_last chained action": "112233..ff",
    "_salt": "7a15f5ec6bc44e7ba6c69f792eb31785"
  },
   "proof": "ccbbaa...00"
 }
```

Note that in the case of complex objects such as dictionaries or lists, these must be conveniently serialized before being hashed, paying special attention to the order of the key-value pairs.

Use of Merkle Trees for the Hashing of Various Operations:
It offers the possibility of using Merkle Trees natively. To do this, and assuming a list of operations formed according to the guidelines defined before, the Merkle tree of the set of operations will be generated, anchoring the root node in the first blockchain and returning the set of cryptographic tests together with the identifier of the transaction in which the value of the root node was anchored.

Thus, given a list of objects, the storage of each one of them will be made in an "operations" collection of the conventional repository having as value the property data, together with a property txid that will make reference to the transaction in which the hash of the data is found and a proof property containing the details of the corresponding proof.

The main consequence of this practice is the reduction of the number of transactions carried out against the blockchain. On the other hand, it should be noted that the verification process requires more complementary information that needs to be stored and a more expensive computational process since it involves the calculation of a greater number of hashes.

### Anchoring Operations in Public Networks:

Registering operations in your own blockchain is a first step in the right direction towards a more transparent relationship with other stakeholders. However, it does not solve the problem at all, bearing in mind that the processor could keep several copies of alternative blockchains in which the said operation never took place or in which its addition was delayed. The greater the public commitment of the organization to the state of a chain, the less risk of corruption exists. Usually, this can be done by increasing the number of participants in the network with access to the operations log in order to make it easier for a user to verify the status of the network with other nodes. Since the chain does not contain personal information, this commitment could be made public by allowing third parties access to the chain.

In order to increase the transparency of the system, the data controller computing node may also choose to anchor a proof of the inclusion of a particular block in an alternative blockchain. For example, on a daily basis, every n blocks or by reaching a block height divisible by 1000, the hash of that block would be anchored in a Bitcoin or Ethereum transaction.

Although the publication of this operation in another alternative blockchain entails a small expense, the execution of this operation will allow an external observer to consolidate the commitment of the person in charge of the treatment and its person in charge with the chain in force. The confirmation will then come given by the fact that the interested party will have the public consolidation of a block subsequent to that in which its own transaction was included, being the published impossible to generate without the participation of the interested party to confirm.

### The Verification Process:

Users will have the ability to store a duplicate of their personal information on their own devices. The data controller will be in charge of keeping custody of these operations in order to serve them when the data subject requests it, for example, by connecting from different devices once he or she has been properly identified.
1. It is checked that the chain of operations to be verified is consistent with the rest of the operations of which there is evidence, confirming whether it is possible to carry out the follow-up to the first operation of which there is evidence.
2. The interested party extracts the txid associated with the operation to be verified.
3. The interested party requests from a network node the detail associated with the txid transaction of the blockchain.
4. The interested party proceeds to extract the information anchored in the OP_RETURN field. This content corresponds to a SHA-3 hash.
5. The interested party will proceed to calculate the corresponding test. There may be two circumstances:
   ∘ Calculating the hash SHA-3 of the operation to verify stored locally.
   ∘ Verifying the integrity of the Merkle Tree test.
6. The correspondence of both summaries is compared: the one anchored in the chain and the one generated by the interested party.
7. If the information is consolidated in a verifiable external blockchain, it is checked
   whether the block in which the txid transaction is counted has already been confirmed in an independent public blockchain. This last step will be necessary as long as full access to the chain cannot be provided. If, for example, the transaction is recorded in block 104, it would be necessary to wait until a subsequent block is externally consolidated (e.g., 110). In the meantime, the transaction should be marked as unconfirmed. In any case, the window of exploitation of such a situation is reduced in time (at most, until the corresponding block is confirmed in a public blockchain) and, in any case, the manipulation could be warned later by the interested party.

### Deletion of Personal Data:

If a user requests the deletion of personal data, the controller must act as follows:
1. It will generate a conventional transaction in which the request to delete the information of a given user is registered.
2. Once the proof of the transaction is anchored, it will share the request with the rest of the participating nodes
3. Archive the operation in a repository independent of the other operations for the purposes of recording and archiving the request under the exemptions set out in Article 17.3 paragraph e) which refers to storage for the formulation, exercise or defense of claims. This operation shall be erased within the periods established by the person responsible for the service. Under no circumstances will this information be used for any other purpose.
4. It will delete all the information related to the user present in the private repositories of each node.

With the deletion of the necessary additional information, the cryptographic summaries anchored in the chain of blocks will go from being pseudonymized to anonymized as the controllers will no longer have the additional information necessary for the identification of the natural persons behind each record.

The number of operations that can be processed by the different blockchain technologies is currently limited. Technologies such as Multichain [11] or Hyperledger Fabric [10] reach levels of 1000 and 3500 operations per second, which could be a limiting factor when anchoring individual cryptographic summaries for each operation.

However, proof of existence may also represent evidences of an undefined number of operations using cryptographic structures such as Merkle Trees [14] in which a single hash can represent several operations. Specifically, Merkle Trees are a cryptographic structure patented in 1979 by Ralph C. Merkle in which each node that is not a leaf is labeled with the cryptographic summary resulting from the concatenation of the lower nodes or child nodes.

In this way, knowing the root node or root node, the concrete position occupied by the hash of an object in the tree and the path followed until the root node could be checked if this object was used or not to generate the hash of the root. This method can be used to anchor a single hash, keeping out of the chain the necessary tests to corroborate the existence of the object and reducing the volume of data that appears in the string on one side and reducing the number of operations anchored on the other.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, present invention may be implemented as a firmware, firmware/software combination, firmware/hardware combination, or a hardware/firmware/software combination.

The scope of the present invention is defined in the following set of claims.

### References

[1] Nakamoto, Satoshi (2008). «Bitcoin: A Peer-to-Peer Electronic Cash System». Available online at: https://bitcoin.org/bitcoin.pdf [2019/03/26].
[2] Poon, Joseph and Dryja, Thaddeus (2016). «The Bitcoin Lightning Network: Scalable OffChain Instant Payments». Available online at: https://lightning.network/lightning-network-paper.pdf [2019/03/26].
[3] Namecoin Developers (2018). «Namecoin FAQ». Available online at: https://namecoin.org/ [2019/03/26].
[4] Wood, Gavin Dr. (2015). «Ethereum: A Secure Decentralised Generalised Transaction Ledger |EIP-150 Revision». Available online at: http://gavwood.com/Paper.pdf [2019/03/26].
[5] Alonso, Kurt M. and Koe (2018). «Zero To Monero: First Edition | A Tehcnical Guide to a Private Digital Currency; for Beginners, Amateurs, and Experts». Available online at: https://getmonero.org/library/Zero-to-Monero-1-0-0.pdf [2019/03/26].
[6] Coinmarketcap (2018). «Top 100 Cryptocurrencies by Market Capitalization». Available online at: https://coinmarketcap.com [2019/03/26].
[7] Parlamento Europeo y Consejo de la Unión Europea (2016). «Reglamento (UE) 2016/679 del Parlamento Europeo y del Consejo, de 27 de abril de 2016 relative a la protección de las personas fisicas en to que respecta al tratamiento de dates personales y a la libre circulación de estos dates y por el que se deroga la Directiva 95/46/CE». Diario Oficial de la Unión Europea. Available online at: https://eur-lex.europa.eu/legal-content/ES/TXT/HTML/?uri=CELEX:32016R0679&from=EN [2019/03/26].
[8] KHI, Ira A. and Gorelik, Aleksandr (2019). «Method and system for managing personal information within independent computer systems and digital networks». European Patent Office EP3440823A1. Available online at: https://patents.google.com/patent/EP3440823A1 [2019/03/26].
[9] Hopwoord, Daira; Bowe, Sean; Hornby, Taylor and Wilcox, Nathan (2018). «Zcash Protocol Specification: Version 2018.0-beta-30». Available online at: https://github.com/zcash/zips/blob/master/protocol/protocol.pdf [2019/03/26].
[10] The Linux Foundation(2017). «Hyperledger Fabric». Available online at: https://github.com/dashpay/dash/wiki/Whitepaper [2019/03/26].
[11] Greenspan, Dr. Gideon (2015). «MultiChain Private Blockchain --- White Paper». Available online at: https://www.multichain.com/download/MultiChain-White-Paper.pdf [2019/03/26].
[12] Bitcoin Developers (2015). «OP_RETURN». Available online at: https://en.bitcoin.it/wiki/OP\_RETURN [2019/03/26].
[13] Dang, Quynh H. (2015). «Secure Hash Standard (SHS)». Federal Information Processing Standards Publication, FIPS PUB 180-4. Available online at: https://www.nist.gov/publications/secure-hash-standard?pub\_id=919060 [2019/03/26].
[14] Merkle, Ralph C. (1979). «Method of providing digital signatures». US Patent US4309569A, Filed: Sep. 5 1979. Available online at: https://patents.google.com/patent/US4309569A/en?oq=US4309569A [2019/03/26].
[15] Multichain Developers (2015). «Multichain Explorer: Web-based explorer for MultiChain blockchains». Available online at: https://github.com/MultiChain/multichain-explorer [2019/03/26].

## Claims

1. A method for not repudiable transparent ordering, replication and logging of operations involving personal data, the method comprising:
- performing, by a user via a computing device, an operation using a data controller computing node, said data controller computing node having writing authorization on a first blockchain, the first blockchain being a permissive blockchain; and
- storing, by the data controller computing node, personal information of the user in a storage system separate from the first blockchain;
**characterized in that** the method further comprises:
- anchoring, by the data controller computing node, a cryptographic proof of said operation in said first blockchain using a hashing algorithm that chains the operation to a previous operation performed by said user, the cryptographic proof being anchored together with a cryptographic string, the latter being a random string of a certain length.

2. The method of claim 1, wherein the random string has a length of 32 hexadecimal characters.

3. The method of claim 1, wherein the personal information of the user is stored in the separate storage system using an operation index mechanism.

4. The method of claim 3, wherein the personal information of the user is stored with a first data field that details the information whose proof has been anchored in the first blockchain and a second data field including the cryptographic proof.

5. The method of claim 1, wherein the hashing algorithm comprises a Merkle Tree.

6. The method of claim 1, further comprising anchoring, by the data controller computing node, a proof of said anchoring of the cryptographic proof in a second blockchain.

7. A system for not repudiable transparent ordering, replication and logging of operations involving personal data, comprising:
- a computing device of a user;
- a data controller computing node;
- a first blockchain; and
- a storage system separate from said first blockchain;
wherein the data controller computing node has writing authorization on the first blockchain, the latter being a permissive blockchain; and wherein the data controller computing node is configured to receive an operation from the user and to store personal information of the user in said storage system,
**characterized in that** the data controller computing node is further configured to:
- anchor a cryptographic proof of said received operation in the first blockchain using a hashing algorithm that chains the operation to a previous operation performed by the user, the cryptographic proof being anchored together with a cryptographic string, the latter being a random string of a certain length.

8. The system of claim 7, wherein the random string has a length of 32 hexadecimal characters.

9. The system of claim 7, wherein the hashing algorithm comprises a Merkle Tree.

10. The system of claim 7, further comprising a second blockchain, the data controller computing node being further configured to anchor a proof of said anchoring of the cryptographic proof in the second blockchain.

11. A non-transitory computer readable medium comprising code instructions that when executed by at least one processor of a computing system implement the method of claim 1.

## Patentansprüche

1. Verfahren zur nicht zurückweisbaren Sortierung, Replikation und Protokollierung von Operationen, die persönliche Daten einschließen, wobei das Verfahren Folgendes umfasst:
- Durchführen einer Operation unter Verwendung eines Datensteuerungsdatenverarbeitungsknotens durch einen Benutzer via eine Datenverarbeitungsvorrichtung, wobei der Datensteuerungsdatenverarbeitungsknoten über eine Schreibautorisierung in einer ersten Blockkette verfügt, wobei die erste Blockkette eine permissive Blockkette ist; und
- Speichern von persönlichen Informationen des Benutzers in einem Speichersystem, das von der ersten Blockkette getrennt ist, durch den Datensteuerungsdatenverarbeitungsknoten;
**dadurch gekennzeichnet, dass** das Verfahren ferner Folgendes umfasst:
- Verankern eines kryptographischen Beweises der Operation durch den Datensteuerungsdatenverarbeitungsknoten in der ersten Blockkette unter Verwendung eines Hashingalgorithmus, der die Operation an eine von dem Benutzer durchgeführte vorherige Operation kettet, wobei der kryptographische Beweis zusammen mit einer kryptographischen Zeichenfolge verankert wird, wobei letztere eine zufällige Zeichenfolge einer bestimmten Länge ist.

2. Verfahren nach Anspruch 1, wobei die zufällige Zeichenfolge eine Länge von 32 hexadezimalen Zeichen aufweist.

3. Verfahren nach Anspruch 1, wobei die persönlichen Informationen des Benutzers unter Verwendung eines Operationsindexmechanismus im getrennten Speichersystem gespeichert werden.

4. Verfahren nach Anspruch 3, wobei die persönlichen Informationen des Benutzers mit einem ersten Datenfeld, das die Informationen detailliert, deren Beweis in der ersten Blockkette verankert wurde, und einem zweiten Datenfeld, das den kryptographischen Beweis beinhaltet, gespeichert werden.

5. Verfahren nach Anspruch 1, wobei der Hashingalgorithmus einen Merkle-Baum umfasst.

6. Verfahren nach Anspruch 1, das ferner das Verankern eines Beweises der Verankerung des kryptographischen Beweises durch den Datensteuerungsdatenverarbeitungsknoten in einer zweiten Blockkette umfasst.

7. System zur nicht zurückweisbaren Sortierung, Replikation und Protokollierung von Operationen, die persönliche Daten einschließen, das Folgendes umfasst:
- eine Datenverarbeitungsvorrichtung eines Benutzers;
- einen Datensteuerungsdatenverarbeitungsknoten;
eine erste Blockkette; und
- ein von der ersten Blockkette getrenntes Speichersystem;
wobei der Datensteuerungsdatenverarbeitungsknoten über eine Schreibautorisierung in der ersten Blockkette verfügt, wobei letztere eine permissive Blockkette ist; und wobei der Datensteuerungsdatenverarbeitungsknoten dazu ausgelegt ist, eine Operation vom Benutzer zu empfangen und persönliche Informationen des Benutzers im Speichersystem zu speichern,
**dadurch gekennzeichnet, dass** der Datensteuerungsdatenverarbeitungsknoten ferner zu Folgendem ausgelegt ist:
- Verankern eines kryptographischen Beweises der empfangenen Operation in der ersten Blockkette unter Verwendung eines Hashingalgorithmus, der die Operation an eine von dem Benutzer durchgeführte vorherige Operation kettet, wobei der kryptographische Beweis zusammen mit einer kryptographischen Zeichenfolge verankert wird, wobei letztere eine zufällige Zeichenfolge einer bestimmten Länge ist.

8. System nach Anspruch 7, wobei die zufällige Zeichenfolge eine Länge von 32 hexadezimalen Zeichen aufweist.

9. System nach Anspruch 7, wobei der Hashingalgorithmus einen Merkle-Baum umfasst.

10. System nach Anspruch 7, das ferner eine zweite Blockkette umfasst, wobei der Datensteuerungsdatenverarbeitungsknoten ferner dazu ausgelegt ist, einen Beweis der Verankerung des kryptographischen Beweises in der zweiten Blockkette zu verankern.

11. Nichttransitorisches computerlesbares Medium, das Codeanweisungen umfasst, die, wenn sie von mindestens einem Prozessor eines Datenverarbeitungssystems ausgeführt werden, das Verfahren nach Anspruch 1 implementieren.

## Revendications

1. Procédé d'organisation, de réplication, et de journalisation transparentes et non répudiables d'opérations impliquant des données personnelles, le procédé comprenant :
- l'exécution, par un utilisateur par le biais d'un dispositif informatique, d'une opération utilisant un noeud informatique de contrôleur de données, ledit noeud informatique de contrôleur de données disposant d'une autorisation d'écriture sur une première chaîne de blocs, la première chaîne de blocs étant une chaîne de blocs permissive ; et
- le stockage, par le noeud informatique de contrôleur de données, des informations personnelles de l'utilisateur dans un système de stockage distinct de la première chaîne de blocs ;
**caractérisé en ce que** le procédé comprend en outre :
- l'ancrage, par le noeud informatique de contrôleur de données, d'une preuve cryptographique de ladite opération dans ladite première chaîne de blocs à l'aide d'un algorithme de hachage enchaînant l'opération à une opération précédente effectuée par ledit utilisateur, la preuve cryptographique étant ancrée conjointement avec une chaîne cryptographique, cette dernière étant une chaîne aléatoire d'une certaine longueur.

2. Procédé selon la revendication 1, dans lequel la chaîne aléatoire a une longueur de 32 caractères hexadécimaux.

3. Procédé selon la revendication 1, dans lequel les informations personnelles de l'utilisateur sont stockées dans le système de stockage distinct à l'aide d'un mécanisme d'index d'opération.

4. Procédé selon la revendication 3, dans lequel les informations personnelles de l'utilisateur sont stockées avec un premier champ de données qui détaille les informations dont la preuve a été ancrée dans la première chaîne de blocs et un second champ de données incluant la preuve cryptographique.

5. Procédé selon la revendication 1, dans lequel l'algorithme de hachage comprend un arbre de Merkle.

6. Procédé selon la revendication 1, comprenant en outre l'ancrage, par le noeud informatique de contrôleur de données, d'une preuve dudit ancrage de la preuve cryptographique dans une seconde chaîne de blocs.

7. Système d'organisation, de réplication, et de journalisation transparentes et non répudiables d'opérations impliquant des données personnelles, comprenant :
- un dispositif informatique d'un utilisateur ;
- un noeud informatique de contrôleur de données ;
- une première chaîne de blocs ; et
- un système de stockage distinct de ladite première chaîne de blocs ;
dans lequel le noeud informatique de contrôleur de données dispose d'une autorisation d'écriture sur la première chaîne de blocs, cette dernière étant une chaîne de blocs permissive ; et dans lequel le noeud informatique de contrôleur de données est configuré pour recevoir une opération de l'utilisateur et pour stocker des informations personnelles de l'utilisateur dans ledit système de stockage,
**caractérisé en ce que** le noeud informatique de contrôleur de données est en outre configuré pour :
- ancrer une preuve cryptographique de ladite opération reçue dans la première chaîne de blocs à l'aide d'un algorithme de hachage qui enchaîne l'opération à une opération précédente effectuée par l'utilisateur, la preuve cryptographique étant ancrée conjointement avec une chaîne cryptographique, cette dernière étant une chaîne aléatoire d'une certaine longueur.

8. Système selon la revendication 7, dans lequel la chaîne aléatoire a une longueur de 32 caractères hexadécimaux.

9. Système selon la revendication 7, dans lequel l'algorithme de hachage comprend un arbre de Merkle.

10. Système selon la revendication 7, comprenant en outre une seconde chaîne de blocs, le noeud informatique de contrôleur de données étant en outre configuré pour ancrer une preuve dudit ancrage de la preuve cryptographique dans la seconde chaîne de blocs.

11. Support lisible par ordinateur non transitoire comprenant des instructions de code qui, lorsqu'elles sont exécutées par au moins un processeur d'un système informatique, mettent en oeuvre le procédé de la revendication 1.
